# EUROPÄISCHE PATENTSCHRIFT

(11) **EP 0 566 942 B1**
(45) Veröffentlichungstag und Bekanntmachung des Hinweises auf die Patenterteilung: **26.08.1998**
(21) Anmeldenummer: 93105907.5
(22) Anmeldetag: 10.04.1993
(51) Int. Cl.: G06F 11/00

(54) **Verfahren zur Reduzierung von Störsignalen die durch digitale Signalprozessoren verursacht werden**
Method of interfering signal reduction caused by digital signal processors
Procédé de réduction de signaux perturbateurs provoqués par des processeurs de signaux numériques

(30) Priorität: 24.04.1992 DE 4213504
(43) Veröffentlichungstag der Anmeldung: 27.10.1993
(73) Patentinhaber: Micronas Intermetall GmbH, 79108 Freiburg (DE)
(72) Erfinder: Hilpert, Thomas, Dipl.-Ing., W-7803 Gundelfingen (DE); Müller, Stefan, Dipl.-Ing., W-7800 Freiburg i.Br. (DE)

(56) Entgegenhaltungen:
- US-A- 4 603 245
- PATENT ABSTRACTS OF JAPAN vol. 13, no. 82 (P-833) 23. Februar 1989 & JP-A-63 265 301
- PATENT ABSTRACTS OF JAPAN vol. 4, no. 126 (E-024) 5. September 1980 & JP-A-55 080 921

## Beschreibung

Die Erfindung betrifft ein Verfahren zur Reduzierung von Störsignalen, die durch die vom ausgeführten Befehlscode abhängige Stromaufnahme von Prozessoren, insbesondere digitalen Signalprozessoren verursacht werden, die sich zyklisch wiederholende, durch Unterbrechungssignale ausgelöste Programmroutinen durchführen, die während ihrer Ablaufzeit zu einer ersten mittleren Stromaufnahme führen, wobei die Ablaufzeit der Programmroutinen kleiner ist als die Zeit zwischen zwei aufeinanderfolgenden Unterbrechungssignalen.

Durch den ohmschen oder induktiven Leitungswiderstand von Versorgungsspannungszuleitungen werden von der Stromaufnahme der angeschlossenen Bauelemente oder Baugruppen abhängige Spannungsabfälle hervorgerufen, die zu überlagerten Störspannungen an den Versorgungsspannungsanschlüssen der Bauelemente bzw. Baugruppen führen können. Über induktive oder kapazitive Kopplungen kann von den Versorgungsspannungszuleitungen auch ein Übersprechen auf Signaleingänge, insbesondere von analogen Schaltungsteilen, erfolgen. Die Wirkung von Störspannungen und bekannte Maßnahmen deren Auswirkungen auf andere Schaltungsteile zu verringern sind beispielsweise in der Zeitschrift Elektronik Heft 23, 16.11.1984 auf den Seiten 118 bis 122 beschrieben.

Bei Baugruppen mit digitaler Signalverarbeitung ist eine der Störquellen der digitale Signalprozessor, der intern wiederum aus Baugruppen wie Addierer, Subtrahierer, Multiplizierer, Accumulator (ACCU), RAM und Datenbusinterface mit jeweils unterschiedlicher Stromaufnahme besteht.

Führt ein solcher digitaler Signalprozessor sich zyklisch wiederholende Programmroutinen aus, so führen diese zu einer mittleren Stromaufnahme des Signalprozessors, die durch die Häufigkeit und die Art der verwendeten Befehlscodes bestimmt wird. Solche sich zyklisch wiederholenden Programmroutinen treten beispielsweise bei der digitalen Signalverarbeitung von Audiosignalen auf, bei der digitalisierte Eingangswerte mit einer vorbestimmten Wiederholrate eingelesen, diese Werte durch Programmroutinen, z.B. Filterfunktionen, bearbeitet werden und anschließend die veränderten Werte wieder ausgegeben werden. Die Ablaufzeit dieser Programmroutinen muß stets so bemessen sein, daß sie kürzer ist als die Zeit zwischen zwei zu bearbeitenden Eingangswerten, da sonst fehlerhafte Ergebnisse auftreten können.

Für die Zeit zwischen dem Ende einer Programmroutine und dem nächsten zu bearbeitenden Eingangswert, der beispielsweise durch ein Unterbrechungssignal signalisiert wird, wird der Signalprozessor entweder in einen speziellen, im allgemeinen besonders stromsparenden, Wartezustand (= WAIT-Befehlscode) gebracht, oder er durchläuft eine Endlosschleife, die durch das Unterbrechungssignal verlassen werden kann.

Durch diesen ständigen Wechsel zwischen der Ausführung einer Programmroutine, bei der in der Regel alle internen Baugruppen des Signalprozessors aktiviert werden, und einem Wartezustand mit geringer Stromaufnahme verursacht der Signalprozessor nicht nur Störsignale in einem Frequenzbereich der durch seine Befehlsausführungszeit bestimmt ist, sondern auch solche, die durch diesen Wechsel verursacht werden.

D.h. neben den Störsignalen mit einer Frequenz die von der Befehlsausführungszeit abhängig ist und die in der Regel weit oberhalb des zu verarbeitenden Nutzsignales liegt, tritt mindestens ein weiteres Störsignal auf, dessen Amplitude und Frequenz vom ständigen Wechsel zwischen Programmroutine und Wartezustand abhängig ist, und dessen Signalspektrum innerhalb des Frequenzbereiches des Nutzsignal oder in der Nähe diese Frequenzbereichs liegen kann.

Besteht eine Verkopplung zwischen dem Signalprozessor und analogen Schaltungsteilen, so wirken sich bereits kleine Störsignale, die auf der Versorgungsspannung auftreten die als Bezugspotential für zu verarbeitende analoge Signale dient oder die durch induktives oder kapazitives Übersprechen auf Signaleingänge gelangen, störend aus.

Besondere Leitungsführungen für das Bezugspotential zu einem gemeinsamen Bezugspunkt sind unabhängig von der Realisierung einer Baugruppe auf einer Leiterplatte oder einem integrierten Schaltkreis nur beschränkt möglich. Ein von einem Bezugspotential freies, symmetrisches Analogsignal benötigt zusätzliche Anschlußpunkte und Leitungen
Es ist daher Aufgabe der Erfindung ein Verfahren anzugeben, mit dem die durch den zyklischen Betrieb des Prozessors verursachten Störsignale reduziert werden können.

Diese Aufgabe wird durch das in Anspruch 1 angegebene Verfahren gelöst, indem zwischen aufeinanderfolgenden Programmroutinen eine Warteroutine vom Prozessor durchgeführt wird, die eine den Programmroutinen entsprechende mittlere Stromaufnahme hervorruft.

Die Programmroutinen führen an ihrem Ende nicht mehr zu einem Wartezustand mit geringer Stromaufnahme des Prozessors, sondern zu einer Warteroutine, bei deren Durchführung der Prozessor eine gegenüber den Programmroutinen möglichst unveränderte mittlere Stromaufnahme hat. Sich zyklisch wiederholende Sprünge der mittleren Stromaufnahme des Prozessors treten damit nicht mehr auf.

Wird durch ein Unterbrechungssignal eine neue Ausführung einer Programmroutine ausgelöst, wird die Warteroutine abgebrochen, die selbstverständlich so auszuführen ist, daß keine für die Ausführung von Programmroutinen erforderlichen Daten verändert werden.

Vorteilhaft besteht die Warteroutine aus einer Folge von Befehlscodes durch die eine statistische Stromaufnahmeverteilung des Prozessors verursacht wird, die annähernd der statistischen Stromaufnahmeverteilung der Programmroutinen entspricht.

Durch diese annähernd gleiche statistische Stromaufnahmeverteilung der Warteroutine wird auch während dieser ein gleichbleibendes Störsignalspektrum im Bereich der Befehlszykluszeit erreicht. Mischprodukte die durch zyklische Änderung des Störsignalspektrums entstehen können werden damit gleichfalls vermieden.

Um diese annähernd gleiche statistische Stromaufnahmeverteilung zu erreichen, muß keine entsprechende Verteilung aller in den Programmroutinen verwendeten Befehlscodes erreicht werden, da einzelne Befehlscodes repräsentativ für die Stromaufnahme ganzer Gruppen von Befehlscodes sind. Es kann also mit wenigen ausgewählten Befehlscodes eine Warteroutine mit den geforderten Eigenschaften realisiert werden.

Eine vorteilhafte Warteroutine bestehend aus einem Datenbuslese-, einem Multiplikations-Additions- und einem Rücksprungbefehl auf den Datenbuslesebefehl berücksichtigt, daß bei Programmroutinen zur Filterberechnung etwa 60 % der verwendeten Befehlscodes Datenbuszugriffe und Multiplikations-Additionsoperationen mit relativ hoher Stromaufnahme des Prozessors und die verbleibenden Befehle solche mit geringer Stromaufnahme wie z.B. Programmsprungbefehle sind.

Der Datenbuslesebefehl am Anfang der Routine wirkt dann noch besonders vorteilhaft, wenn sich der Datenbus während der Warteroutine in einem nicht definierten Zustand mit veränderlichem Inhalt befindet. Durch ständig wechselnde Eingangswerte werden so auch noch schwankende Stromaufnahmen des Prozessors berücksichtigt, die vom Wert der verarbeiteten Daten abhängig sind.

Die Warteroutine kann in einer Ausführungsform der Erfindung als Folge von Befehlscodes im Programmspeicher des Prozessors gespeichert werden und im Anschluß an die Programmroutinen ausgeführt werden. Dies erlaubt eine einfache Anpassung bereits bestehender Anwendungsprogramme.

Für neue Prozessoren kann in einer anderen Ausführungsform der Erfindung die Warteroutine als Folge von Befehlscodes im Mikrocode des Prozessors festgelegt werden und über einen vorbestimmten Befehlscode aufgerufen werden.

Diese Lösung benötigt weniger Programmspeicherplatz als eine im Programmspeicher des Signalprozessors abgelegte Warteroutine, der Mikrocode des Prozessors muß aber an das neue Verfahren angepaßt werden.

Die Erfindung wird im folgenden anhand der Zeichnungen näher erläutert. Darin zeigen:
- Fig. 1: ein typisches Blockschaltbild einer Baugruppe mit analoger und digitaler Signalverarbeitung,
- Fig. 2: die Programmspeicherbelegung eines digitalen Signalprozessors mit Programmroutinen und die dazu beim Stand der Technik korrespondierende Stromaufnahme bei Ausführung der Programmroutinen,
- Fig. 3: die Programmspeicherbelegung eines digitalen Signalprozessors, in dessen Mikrocode eine erfindungsgemäße Warteroutine realisiert ist, mit Programmroutinen und die dazu korrespondierende Stromaufnahme bei der Ausführung der Programmroutinen und der Warteroutine.

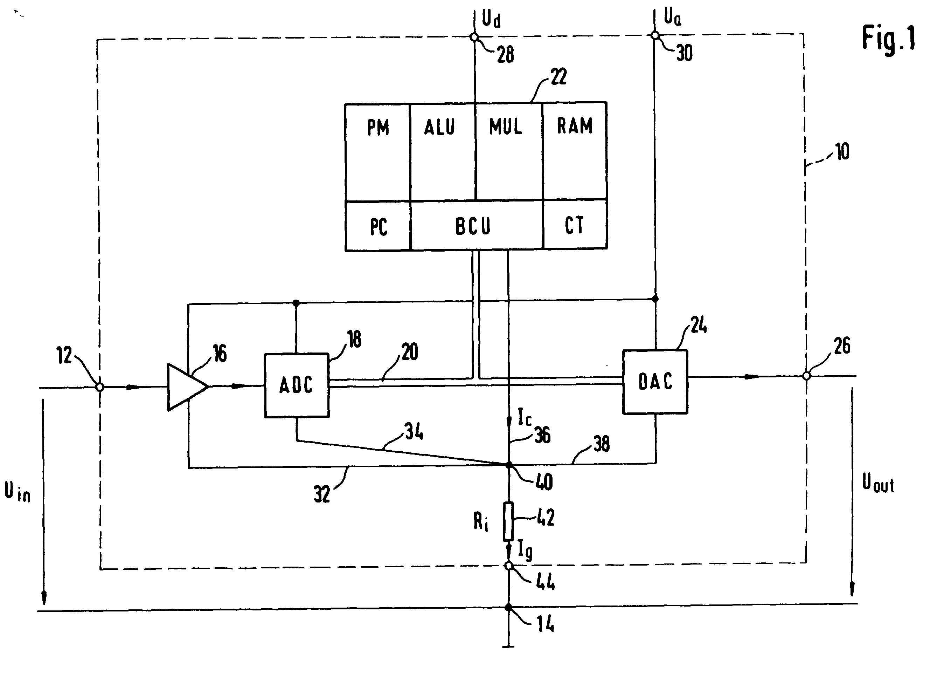

In Fig. 1 ist ein Blockschaltbild einer Baugruppe zur analogen und digitalen Signalverarbeitung dargestellt. Diese Baugruppe 10 kann sowohl auf einer Leiterplatte als auch in einem integrierten Schaltkreis auf einem Chip realisiert sein.

An einem Eingang 12 der Baugruppe 10 wird ein analoges Eingangssignal Uᵢₙ in eingespeist, dessen Bezugspotential Masse 14 ist. Nach einer Signalverstärkung durch einen Analogverstärker 16 wird das analoge Eingangssignal Uᵢₙ dem Eingang eines Analog-Digital-Umsetzers 18 zugeführt, der mit einer vorbestimmten Wiederholrate ein digitalisiertes Eingangssignal an seinem Ausgang bereitstellt. Dieser Ausgang des Analog-Digital-Umsetzers 18 ist über einen Daten- und Steuerbus 20 mit einem digitalen Signalprozessor 22 verbunden. Die wesentlichen Bestandteile dieses Signalprozessors 22 sind ein Programmspeicher PM, ein Addressierer PC für den Programmspeicher, eine ALU mit Accumulator, ein Multiplizierer MUL, ein RAM für das Abspeichern von Zwischen- und Endergebnissen, eine Zeitgeberschaltung CT und eine Datenund Steuerbus-Kontrolleinheit BCU, mit der die Zugriffe und die Zugriffsberechtigung auf den Daten- und Steuerbus 20 gesteuert werden. Zur Ausgabe von Ergebniswerten ist der digitale Signalprozessor über den Daten- und Steuerbus 20 mit dem Eingang eines Digital-Analog-Umsetzers 24 verbunden, dessen analoges Ausgangssignal Uₒᵤₜ zu einem Ausgang 26 der Baugruppe 10 geführt ist und das wie das Eingangssignal Uᵢₙ als Bezugspotential Masse 14 hat.

Zur Spannungsversorgung des digitalen Signalprozessors 22 wird an einem Eingang 28 der Baugruppe 10 eine Spannung Ud von z.B. 5 V zugeführt. Für die Spannungsversorgung des Analogverstärkers 16, des Analog-Digital-Umsetzers 18 und des Digital-Analog-Umsetzers 24 wird an einem weiteren Eingang 30 der Baugruppe 10 eine Spannung Ua von z.B. 12 V zugeführt.

Weitere, möglicherweise erforderliche Versorgungsspannungen und Referenzspannungen, sowie die teilweise Versorgung der Umsetzer 18, 24 mit der Versorgungsspannung des digitalen Signalprozessors sind zur besseren Übersichtlichkeit nicht dargestellt. Außerdem sind die zum Betrieb erforderlichen Taktsignale und Taktteiler nicht dargestellt.

Über Masseleitungen 32, 34, 36, 38 sind Analogverstärker 16, Analog-Digital-Umsetzer 18, digitaler Signalprozessor 22 und Digital-Analog-Umsetzer 24 mit einem Knotenpunkt 40 verbunden. Dieser Knotenpunkt 40 ist über einen Leitungswiderstand 42 mit dem Masseanschluß 44 der Baugruppe 10 verbunden. In dieser vereinfachten Darstellung der Masseleitungsführung soll der Leitungswiderstand 42 mit einem Wert R_{L} alle Verkopplungswiderstände repräsentieren, die innerhalb und außerhalb der Baugruppe durch gemeinsame Leitungsführung auftreten können.

Spannungsabfälle, die an diesem Leitungswiderstand 42 auftreten, wirken sich insbesondere auf die analogen Teile von Analogverstärker 16, Analog-Digital-Umsetzer 18, Digital-Analog-Umsetzer 24 aus, die den internen Knotenpunkt 40 als Bezugspotential verwenden. Für den Analogverstärker 16 bedeutet dies beispielsweise, daß er nicht das Eingangssignal Uᵢₙ sondern (Uᵢₙ - R_{L} x I_{g}) verstärkt. Wobei I_{g} die gesamte Stromaufnahme der Baugruppe 10 bedeutet. Die tromaufnahme des Analogverstärkers 16, des Digital-Analog-Umsetzers 18 und des Digital-Analog-Umsetzers 24 haben einen über die Zeit etwa konstanten Mittelwert, der nur geringfügig vom anliegenden Eingangssignal Uᵢₙ bzw. Ausgangssignal Uₒᵤₜ beeinflußt wird. Die Stromaufnahme des digitalen Signalprozessors 22 dagegen variiert mit den Aktivitäten des Prozessors.

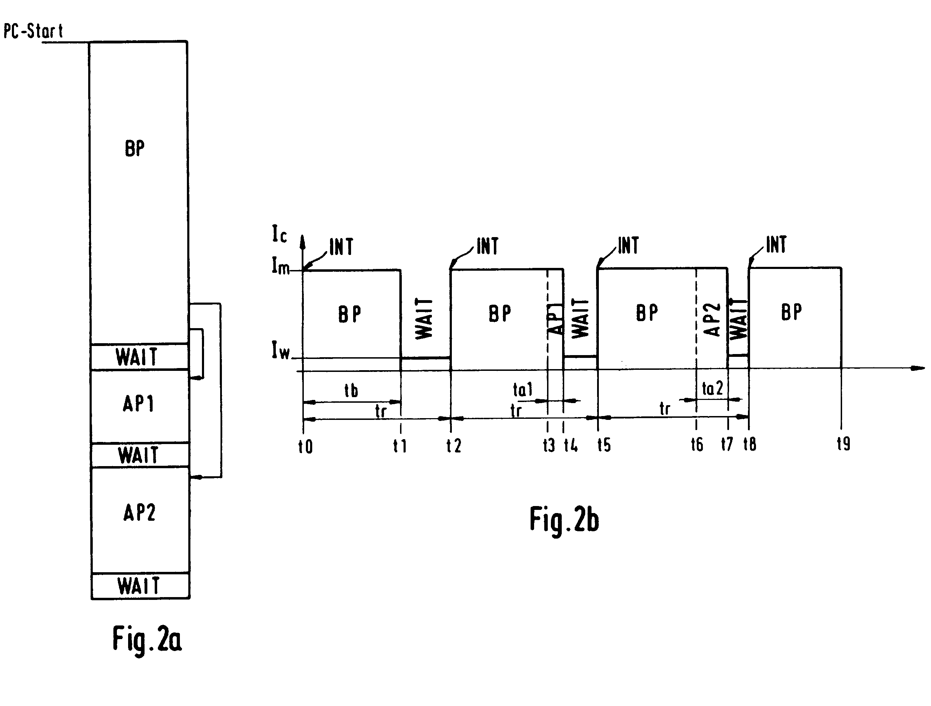

Dazu ist in Fig. 2a ein Beispiel für die Belegung des Programmspeichers PC mit Programmroutinen und in Fig. 2b die dazu bei der Ausführung der Programmroutinen korrespondierende Stromaufnahme des digitalen Signalprozessors dargestellt.

Beginnend mit der Programmspeicheraddresse PC-Start in Fig. 2a ist eine erste Programmroutine BP im Programmspeicher gespeichert, die mit einem WAIT-Befehlscode endet, der den digitalen Signalprozessor in einen besonders stromsparenden Wartezustand schaltet und den er nur durch ein Unterbrechungssignal (= INTerrupt) wieder verlassen kann. Innerhalb der Programmroutine BP gibt es bedingte Sprungbefehle, die dazu führen, daß diese Programmroutine nicht zu Ende geführt wird, sondern weitere Programmroutinen AP1, AP2 ausgeführt werden, die ihrerseits gleichfalls mit einem WAIT-Befehlscode enden. Diese Programmroutinen AP1, AP2 sind im Anschluß an die Programmroutine BP abgespeichert.

Das Unterbrechungssignal (INTerrupt), mit dem der Wartezustand verlassen werden kann, kann beispielsweise vom Analog-Digital-Umsetzer 18 (Fig. 1) mit der Bereitstellung eines neuen digitalisierten Eingangssignalwertes oder prozessorintern von der Zeitgeberschaltung CT (Fig. 1) in vorgegebenen Zeitabständen ausgelöst werden.

Die in Fig. 2b zur Ausführung der Programmroutinen korrespondierende Stromaufnahme I_{c} des digitalen Signalprozessors ist vom Zeitpunkt t₀ beginnend mit einem ersten Unterbrechungssignal INT aufgetragen. Während der Ausführungszeit t_{b} der Programmroutine BP erreicht die mittlere Stromaufnahme I_{c} einen Mittelwert Iₘ.

Zum Zeitpunkt t₁ führt die Programmroutine BP den abschließenden WAIT-Befehlscode aus und die Stromaufnahme sinkt auf den Wert I_{w} .

Bei diesem Wert I_{w} bleibt die Stromaufnahme, bis zum Zeitpunkt t₂ ein weiteres Unterbrechungssignal INT, die die Programmroutine BP mit der mittleren Stromaufnahme Iₘ erneut startet.

Im Laufe dieser Programmroutine BP führt ein bedingter Sprungbefehl dazu, daß ab dem Zeitpunkt t₃ die Programmroutine AP1 ausgeführt wird, die zum Zeitpunkt t₄ mit dem WAIT-Befehlscode abschließt, der einen Wechsel der Stromaufnahme auf den Wert I_{w} verursacht.

Zum Zeitpunkt t₅ wird die Programmroutine BP durch ein weiteres Unterbrechungssignal INT gestartet. Im Laufe dieser Programmroutine BP führt ein bedingter Sprungbefehl dazu, daß ab dem Zeitpunkt t₆ die Programmroutine AP2 ausgeführt wird, die zum Zeitpunkt t₇ mit dem WAIT-Befehlscode abschließt, der wieder einen Wechsel der Stromaufnahme auf den Wert I_{w} verursacht. Zum Zeitpunkt t₈ wird eine Programmroutine BP gestartet, die ohne zusätzliche Programmroutine AP1 oder AP2 zum Zeitpunkt t₉ mit den WAIT-Befehlscode abgeschlossen wird.

Wie diesem Diagramm Fig. 2b zu entnehmen ist, findet mit der Wiederholzeit tr der Unterbrechungssignale ein impulsartiger Wechsel zwischen der mittleren Stromaufnahme Iₘ der Programmroutinen BP, AP1, AP2 und der Stromaufnahme I_{w} des Wartezustandes statt, wobei der Impuls mit der mittleren Stromaufnahme Iₘ der Programmroutinen einer Pulsbreitenmodulation durch unterschiedliche Ausführungszeiten unterworfen ist.

Sowohl die Amplitude des Wechsels der Stromaufnahme (Iₘ - I_{w}) , als auch die aus der Pulsbreitenmodulation entstehenden Störsignale sind insbesondere bei Audioanwendungen störend. Durch die Wechsel tritt ein Störsignal im Frequenzbereich 1/tr auf. Das Störspektrum der Pulsbreitenmodulation kann besonders störend sein, da es in den Frequenzbereich des Nutzsignals fallen kann.

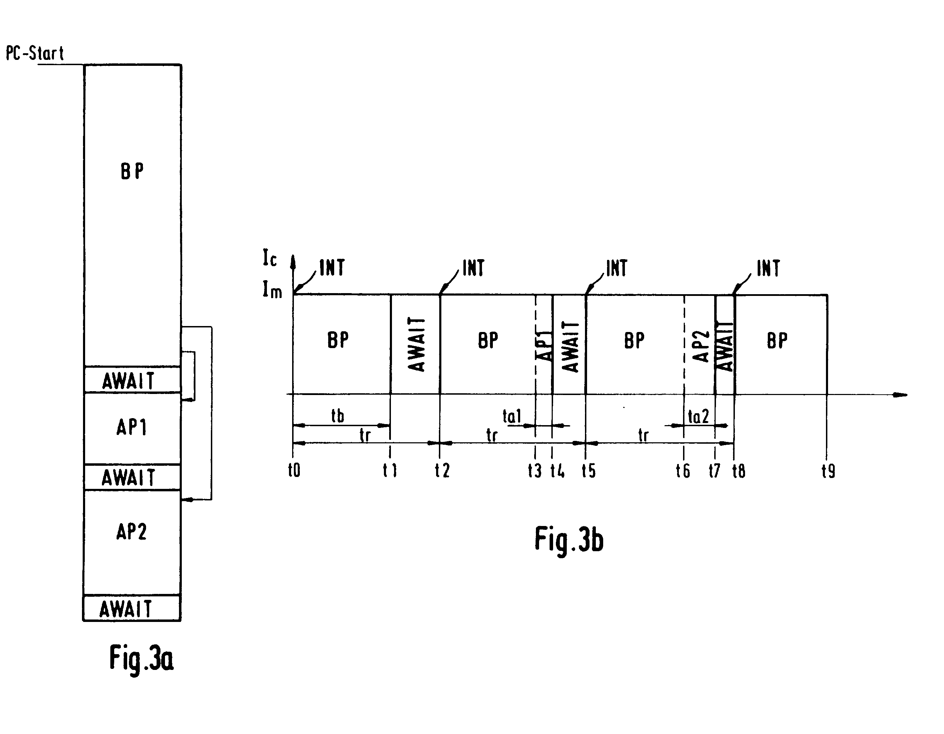

In Fig. 3a und 3b ist das Verhalten des digitalen Signalprozessors unter den gleichen Bedingungen wie in den Fig. 2a und 2b dargestellt, wobei jedoch eine erfindungsgemäße Warteroutine im Mikrocode des Prozessors festgelegt ist, die durch einen eigenen Befehlscode aufgerufen werden kann. Soweit Programmspeicherplatzbelegung und Zeitverhalten übereinstimmen, wurden die Bezeichnungen der Fig. 2a und 2b beibehalten.

Beginnend mit der Programmspeicheradresse PC-Start in Fig. 3a ist eine erste Programmroutine BP im Programmspeicher gespeichert, die mit einem AWAIT-Befehlscode endet. Diesem Befehlscode AWAIT ist im Microcode des Prozessors eine Warteroutine bestehend aus einem Datenbuslesebefehl, einem Multiplikations-Additions- und einem Rücksprungbefehl auf den Datenbuslesebefehl zugeordnet. Durch diese Befehle werden die relevantesten Stromverbraucher innerhalb des digitalen Signalprozessors angesprochen.

Mit dem Datenbuslesebefehl werden die Buskontrolleinheiten BCU und die ALU oder der Multiplizierer, mit dem Multiplikations- und Additionsbefehl, der Multiplizier und die ALU angesprochen, die eine relativ hohe Stromaufnahme haben. Der Sprungbefehl dagegen führt bei seiner Ausführung nur zu einer geringen Stromaufnahme. Diese Verteilung von Befehlen führt zu einer mittleren Stromaufnahme während der Warteroutine, die der von Programmroutinen digitaler Filter entspricht.

Die in Fig. 3b zur Ausführung der Programmroutinen korrespondierende Stromaufnahme I_{c} des digitalen Signalprozessors ist vom Zeitpunkt t₀ beginnend mit einem ersten Unterbrechungssignal INT aufgetragen. Während der Ausführungszeit t_{b} der Programmroutine BP erreicht die mittlere Stromaufnahme I_{c} einen Mittelwert Iₘ.

Zum Zeitpunkt t₁ führt die Programmroutine BP den abschließenden AWAIT-Befehlscode aus und im Mikrocode des Prozessors wird die oben beschriebene Warteroutine durchgeführt. Die Stromaufnahme bleibt während dieser Zeit auf dem Mittelwert Iₘ. Durch ein weiters Unterbrechungssignal INT zum Zeitpunkt t₂ wird die Warteroutine abgebrochen und erneut die Programmroutine BP mit der mittleren Stromaufnahme Iₘ gestartet.

Im Laufe dieser Programmroutine BP führt ein bedingter Sprungbefehl dazu, daß ab dem Zeitpunkt t₃ die Programmroutine AP1 ausgeführt wird, die zum Zeitpunkt t₄ mit dem AWAIT-Befehlscode abschließt.

Zum Zeitpunkt t₅ wird die Programmroutine BP durch ein weiteres Unterbrechungssignal INT gestartet, in deren Verlauf ein bedingter Sprungbefehl dazu führt, daß ab dem Zeitpunkt t₆ die Programmroutine AP2 ausgeführt wird, die zum Zeitpunkt t₇ mit dem AWAIT-Befehlscode abschließt. Zum Zeitpunkt t₈ wird eine Programmroutine BP gestartet, die ohne zusätzliche Programmroutine AP1 oder AP2 zum Zeitpunkt t₉ mit den AWAIT-Befehlscode abgeschlossen wird.

## Patentansprüche

1. Verfahren zur Reduzierung von Störsignalen die durch die vom ausgeführten Befehlscode abhängige Stromaufnahme (I_{c}) von Prozessoren, insbesondere digitalen Signalprozessoren, verursacht werden, die sich zyklisch wiederholende, durch Unterbrechungssignale (INT) ausgelöste, Programmroutinen (BP, AP1, AP2) durchführen, die während ihrer Ablaufzeit zu einer ersten mittleren Stromaufnahme (Iₘ) führen, wobei die Ablaufzeit der Programmroutinen kleiner ist, als die Zeit (tᵣ) zwischen zwei aufeinanderfolgenden Unterbrechungssignalen (INT),
dadurch gekennzeichnet, daß
zwischen aufeinanderfolgenden Programmroutinen (BP, AP1, AP2) eine Warteroutine vom Prozessor (22) durchgeführt wird, die eine den Programmroutinen (BP, AP1, AP2) entsprechende mittlere Stromaufnahme (Iₘ) des Prozessors (22) hervorruft, ohne daß dabei für die Ausführung von Programmroutinen erforderliche Daten verändert werden.

2. Verfahren nach Anspruch 1, dadurch gekennzeichnet, daß die Warteroutine aus einer Folge von Befehlscodes besteht, durch die eine statistische Stromaufnahmeverteilung des Prozessors (22) verursacht wird, die annähernd der statistischen Stromaufnahmeverteilung der Programmroutinen (BP, AP1, AP2) entspricht.

3. Verfahren nach Anspruch 2, dadurch gekennzeichnet, daß die Warteroutine aus einem Datenbuslese-, einem Multiplikations-Additions- und einem Rücksprungbefehl auf den Datenbuslesebefehl besteht.

4. Verfahren nach einem der vorhergehenden Ansprüche, dadurch gekennzeichnet, daß die Warteroutine als Folge von Befehlscodes im Programmspeicher des Prozessors (22) gespeichert ist und im Anschluß an die Programmroutinen ausgeführt wird.

5. Verfahren nach einem der Ansprüche 1 bis 3, dadurch gekennzeichnet, daß die Warteroutine als Folge von Befehlscodes im Mikrocode des Prozessors (22) festgelegt wird und über einen vorbestimmten Befehlscode (AWAIT) aufgerufen werden kann.

6. Verfahren nach Anspruch 5, dadurch gekennzeichnet, daß alle sich zyklisch wiederholenden Programmroutinen (BP, AP1, AP2) mit dem Befehlscode (AWAIT) enden, der die Warteroutine im Mikrocode des Prozessors aufruft.

## Claims

1. A method of reducing spurious signals caused by the power consumption (I_{c}) of processors, particularly digitial signal processors, which is dependent on the instruction code being executed, said processors executing cyclically recurring program routines (BP, AP1, AP2) which are initiated by interrupts (INT) and, during their run time, result in a first mean power consumption (Iₘ), the run time of the program routines being shorter than the time (tᵣ) between two successive interrupts (INT),
characterized in that
between successive program routines (BP, AP1, AP2), the processor (22) executes a wait routine which causes a mean power consumption of the processor (22) corresponding to the mean power consumption (Iₘ) during the program routines (BP, AP1, AP2), without the data necessary for the execution of program routines being changed.

2. A method as claimed in claim 1, characterized in that the wait routine consists of a sequence of instruction codes which cause a statistical power consumption distribution of the processor (22) approximately corresponding to the statistical power consumption distribution of the program routines (BP, AP1, AP2).

3. A method as claimed in claim 2, characterized in that the wait routine consists of a data bus read instruction, a multiply-add instruction, and a return to the data bus read instruction.

4. A method as claimed in any one of the preceding claims, characterized in that the wait routine is stored as a sequence of instruction codes in the program memory of the processor (22) and is executed following the program routines.

5. A method as claimed in any one of claims 1 to 3, characterized in that the wait routine is fixed as a sequence of instruction codes in the microcode of the processor (22) and can be invoked via a predetermined instruction code (AWAIT).

6. A method as claimed in claim 5, characterized in that all the cyclically recurring program routines (BP, AP1, AP2) end with the instruction code (AWAIT), which invokes the wait routine in the microcode of the processor.

## Revendications

1. Procédé de réduction de signaux perturbateurs qui sont provoqués par la consommation de courant (Ic), dépendant du code d'instruction exécuté, de processeurs, en particulier de processeurs de signaux numériques, qui exécutent des routines de programme (BP, AP1, AP2) qui se répètent de manière cyclique, qui sont déclenchées par des signaux d'interruption (INT) et qui, pendant la durée de leur déroulement, impliquent une première consommation moyenne de courant (Im), la durée de déroulement des routines de programme étant plus courte que le temps (tr) séparant deux signaux d'interruption (INT) successifs,
caractérisé en ce que
entre des routines de programme successives (BP, AP1, AP2), on fait exécuter par le processeur (22) une routine d'attente qui implique une consommation moyenne de courant (Im) correspondant aux routines de programme (BP, AP1, AP2), sans que les données nécessaires pour l'exécution de routines de programme ne soient modifiées.

2. Procédé selon la revendication 1, caractérisé en ce que la routine d'attente est constituée d'une série de codes d'instruction grâce à laquelle on provoque une répartition statistique de la consommation de courant du processeur (22) qui correspond approximativement à la répartition statistique de la consommation de courant des routines de programme (BP, AP1, AP2).

3. Procédé selon la revendication 1 ou 2, caractérisé en ce que la routine d'attente est constituée d'une instruction de lecture de bus, d'une instruction de multiplication-addition et d'une instruction de saut de renvoi sur l'instruction de lecture de bus.

4. Procédé selon l'une quelconque des revendications précédentes, caractérisé en ce que la routine d'attente est stockée sous la forme d'une série de codes d'instruction dans la mémoire de programme du processeur (22) et est exécutée à la suite des routines de programme.

5. Procédé selon l'une quelconque des revendications 1 à 3, caractérisé en ce que la routine d'attente est implémentée sous la forme d'une série de codes d'instruction dans le microcode du processeur (22) et peut être appelée par l'intermédiaire d'un code d'instruction prédéterminé (AWAIT).

6. Procédé selon la revendication 5, caractérisé en ce que toutes les routines de programme (BP, AP1, AP2) à répétition cyclique se terminent par le code d'instruction (AWAIT) qui appelle la routine d'attente se trouvant dans le microcode du processeur.
